# EUROPEAN PATENT APPLICATION

(11) **EP 2 053 835 A1**
(43) Date of publication of application: **29.04.2009**
(21) Application number: 08155301.8
(22) Date of filing: 28.04.2008
(51) Int. Cl.: H04L 29/12

(54) **Method of setting IP address to network device**

(30) Priority: 22.10.2007 TW 96139562
(71) Applicant: Contrel Technology Co., Ltd., Tainan County (TW)
(72) Inventor: Liu, Jen-Chi, Hsinchu City (TW); Lee, Bing-Huan, Kaohsiung County (TW)
(74) Representative: Lang, Christian

(57) **Abstract**

A method for setting an IP (Internet Protocol) address to a network device is provided. In this method, a step is first performed to check if a DHCP server exists in a network domain and obtain a checking result. When the checking result is yes, a dynamic IP address is obtained from the DHCP server and is set to a network device. When the checking result is no, a predetermined IP address and a predetermined gateway address are set to the network device.

## Description

### BACKGROUND

### Field of Invention

The present invention relates to a method for setting an Internet protocol (IP) address. More particularly, the present invention relates to a method for automatically choosing a dynamic IP address or a static IP address for use.

### Description of Related Art

As Internet matures with the advance of time, various Internet services are provided, and accordingly, various network devices with different functions also are presented at the market continuously.

For performing data-exchanging, data-transferring or data-processing to provide services to users, a network device first has to be connected to the Internet, and the first step for connecting the network device to the Internet is to obtain an IP address for the network device.

Most network devices currently existing in the market, such as Internet protocol private branch exchanges (IP PBX), voice over Internet protocol (VoIP) gateways, routers, or router switches, etc., generally adopt a first method as described below to obtain an IP address. Before delivering a network device to a user, the manufacturer has pre-set a default IP address to the network device, which is referred to as a static IP and is recorded in a user manual to inform the user of this information. After connecting the network device to the Internet, the user then may use another device, which is connected to the Internet and has an operation interface, to access the network device via the static IP address for adjusting the network settings of the network device, for example, changing the static IP address to the setting of a dynamic host configuration protocol (DHCP) so as to obtain a dynamic IP address; or changing the static IP address to another legitimate static IP address which can be used in this Internet environment.

Besides, some other types of network devices may use a second method as described as below to obtain an IP address. Before being delivered to a user, the aforementioned network device has been configured to a DHCP setting, and thus, when the user connects the network device to the Internet, the network device can automatically obtain a dynamic IP address via a DHCP server existing in the Internet.

Internet environments may be different for the network device users. Thus, if there is no DHCP server existing in an Internet environment, the second method described above cannot be used for getting an IP address, and the network device using the same method will fail to obtain an IP address. In this situation, the network device user has to set the IP address via a specific port and if the network device itself does not have the specific port, the user may have to dismantle the network device so as to modify the network setting of the network device for connecting to the Internet. Moreover, the second method described above is disadvantageously too complicated in modifying the network setting when being used in a static IP Internet environment.

On the other hand, when the first method described above is used in a DHCP Internet environment, the user still has to modify the network setting of the network device by itself. Therefore, the disadvantage of the first method is that, an extra setting step has to be performed when the first method is used in a dynamic IP Internet environment using DHCP.

Hence, there is a need to provide a method for setting an IP address to a network device suitable for use in various Internet environments, thereby reducing the setting steps for the network device user.

### SUMMARY

An aspect of the present invention is to provide a method for setting an IP address to a network device, wherein a network setting adjusting is performed without a specific port of a network device when being used in a static IP environment, and at the same time, the network device can be used without an extra modification of the network setting performed by the user when the network device with a DHCP setting is used in a dynamic IP address environment.

According to one embodiment of the present invention, a method for setting an IP address to a network device is provided. In this method, the network device is first initialized according to a network configuration. Then, a step is performed to check if a DHCP server exists in a domain in which the network device is located, and thus a first checking result is obtained. Thereafter, a dynamic IP address is obtained from the DHCP server and is set to the network device when the first checking result is yes, and alternatively, a predetermined IP address and a predetermined gateway address are set to the network device when the first checking result is no.

According to another embodiment of the present invention, a method for setting an IP address to a network device is provided. In this method, the network device is initialized according to a network configuration. Then, a step is performed to check if the network configuration includes valid information regarding an IP address and a gateway address, and thus a first checking result is obtained. When the first checking result is no, a step is performed to check if a DHCP server exists in a domain in which the network device is located, and thus a second checking result is obtained, and when the second checking result is yes, a dynamic IP address is obtained from the DHCP server and is set to the network device. After the dynamic IP address is set to the network device, a first packets-checking step is performed to confirm if the DHCP server is operated normally in the domain. When the result of the first packets-checking step is yes, the network configuration is kept the same. When the result of the first packets-checking step is no, a predetermined IP address and a predetermined gateway address are set to the network device by accessing the network device via a default IP address. When the second checking result is no, the predetermined IP address and the predetermined gateway address are set to the network device. After the predetermined IP address and the predetermined gateway address are set to the network device, a second packets-checking step is performed to confirm if a first gateway device corresponding to the predetermined gateway address is connected to the network device. When the result of the second packets-checking step is yes, a network configuration-updating step is performed to update the IP address with the predetermined IP address and the gateway address with the predetermined gateway address in the network configuration, and when the result of the second packets-checking step is no, the network configuration is kept the same. When the first checking result is yes, a third packets-checking step is performed to confirm if a second gateway device corresponding to the gateway address is connected to the network device, and when the result of the third packets-checking step is yes, the network configuration is kept the same, and when the result of the third packets-checking step is no, the predetermined IP address and the predetermined gateway address are set to the network device.

The aforementioned embodiments at least have the advantages that, a dynamic IP address or a static IP address can be automatically selected for use, thereby reducing the number of setting steps for users, further reducing the complication and time of performing setting steps; and, the method of the present invention can be flexibly suitable for use in various Internet environments.

### BRIEF DESCRIPTION OF THE DRAWINGS

For a more complete understanding of the present invention, and the advantages thereof, reference is now made to the following descriptions taken in conjunction with the accompanying drawings, in which:

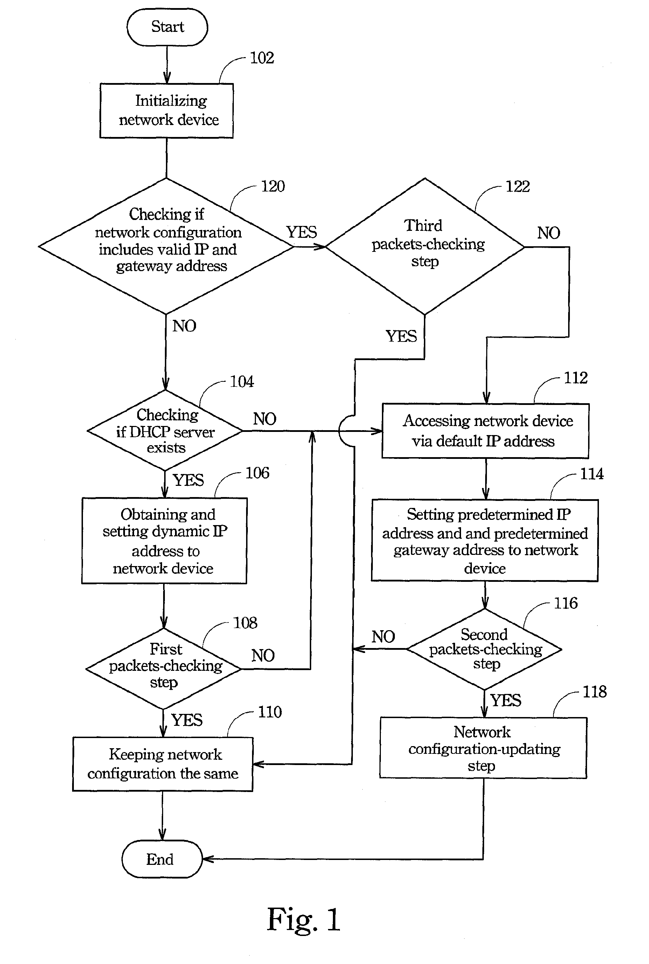

FIG. 1 is a schematic flow chart showing a method for setting an IP address to a network device according to an embodiment of the present invention.

### DESCRIPTION OF THE PREFERRED EMBODIMENTS

In the following disclosure, it is understood that specific embodiments are provided as examples to teach the broader inventive concept, and one of ordinary skill in the art can easily apply the teaching of the present disclosure to other methods and systems. Moreover, it is understood that the method of the present invention includes structures and/or steps know in the art. These structures and steps are well know in the art, and thus are only discussed in a general level of detail. In addition, the present disclosure may repeat reference numerals and/or letters in the drawings. This repetition is for the purpose of convenient and clear explanations and does not in itself dictate a necessary combination between the features or steps in the drawings.

Referring to FIG. 1, FIG. 1 is a flow chart showing a method for setting an IP address to a network device according to an embodiment of the present invention. Firstly, a step 102 is performed for initializing the network device according to a network configuration, wherein an initial network configuration is used to initialize and set the network device an initial state adopting a dynamic host configuration protocol (DHCP) setting. The network configuration can be such as a configuration file used for recording the settings of the network device about Internet connection. Then, a step 104 is performed for checking the existence of a DHCP server, wherein the network device broadcasts a request to all network devices in a domain in which the network device is located for obtaining a dynamic Internet protocol (IP) address, so as to check if there is any DHCP server existing in the domain. When the checking result of the step 104 is yes, then a step 106 is performed for obtaining and setting a dynamic IP address to the network device. After receiving the request for getting the dynamic IP address from the network device, the DHCP server assigns a dynamic IP address and other data such as a subnet mask and a predetermined gateway address to the network device, and after the network device has received those data, those data are set to the network configuration of the network device, thereby enabling the network device to access the information residing in the domain.

When the checking result of the step 104 is no (i.e. no DHCP server exists in the domain in which the network is located), a step 114 is performed for setting a predetermined IP address and a predetermined gateway address, wherein the predetermined IP address and the predetermined gateway address are set to the network configuration of the network device so as to enable the network device to access the information in the domain in which the network device is located. In another embodiment, the network device may be an Internet protocol private branch exchange (IP PBX) or a voice over Internet protocol (VoIP) gateway.

Referring again to FIG. 1, in another embodiment, the method for setting the IP address to the network device includes a first packets-checking step 108. After step 106, the step 108 is performed for delivering a plurality of data packets to the DHCP server in the domain to confirm if the DHCP server accepts the parameters about the Internet settings of the network device; and if the DHCP server works normally in the domain. The step 108 of performing a first packets-checking step can be, for example, performing a PING command.

When the result of the step 108 is yes, a step 110 is performed for keeping the network configuration the same as the default setting which is set when the network device is delivered out of the factory. For example, the network device pre-adopts a DHCP setting which is set when being delivered out of the factory, and when the result of the first packets-checking step (step 108) is yes, the network device keeps using the DHCP setting without changing its network configuration.

When the result of the first packets-checking step (step 108) is no, the step 114 is performed for setting a predetermined IP address and a predetermined gateway address.

In another embodiment, before the step 114 is performed, the network device can be accessed via a default IP address (step 112), wherein a user can obtain the default IP address through a user's manual provided by the manufacturer. At this time, the user can utilize another device (such as a personal computer or a personal digital assistant (PDA)) connected to the domain via an operation interface of the device and the default IP address to connect the network device, thereby modifying the network setting of the network device to a predetermined IP address and a predetermined gateway address, thus enabling the network device to access the information in the domain.

In another embodiment, after the step 114 is completed, a second packets-checking step 116 is performed, wherein a plurality of data packets are delivered by the network device to the gateway device corresponding to the aforementioned predetermined gateway address, so as to confirm if the network device is connected to the gateway device.

When the checking result of the step 116 is no, a network configuration-updating step 118 is performed for updating the network configuration of the network device. A write module of the network device is used to write and save the predetermined IP address and the predetermined gateway address set in the step 114 into the network configuration of the network device. In one embodiment, the write module used in the step 118 for updating the network configuration can provide an operation interface to the user for determining if the predetermined IP address and the predetermined gateway address set in the step 114 are written into the network configuration of the network device. If the predetermined IP address and the predetermined gateway address set in the step 114 are not written into the network configuration of the network device, since the network device has a write-protection function, the network configuration of the network device will be still the same as the previous settings and the current setting thereof will be deleted when the network device is restated. In another embodiment, the write module can be an electronic circuit including a software program. After the network configuration of the network device has been updated by the write module, the network device will be initialized in accordance with the updated network configuration when the network device is restarted (step 102).

When the checking result of the step 116 is no, the step 110 is performed for keeping the network configuration the same (i.e. the predetermined IP address and the predetermined gateway address of the step 114 are not written into the network configuration via the write module).

When the setting data currently by the network device is not written into the network configuration of the network device via the write module, the network device automatically deletes the setting data when being restarted, and then the network device recovers its network configuration back to be the network configuration preserved and used previously, and thus the network device is initialized in accordance with the network configuration preserved and used previously (step 102).

In another embodiment, after the step 102 is preformed, a step 120 is performed for checking if the network configuration includes valid information regarding an IP address and a gateway address, i.e. whether an IP address and a gateway address exist in the network configuration. When the checking result of the step 120 is no, the step 104 is performed for checking if any DHCP server exists in the domain in which the network device is located. When the checking result of the step 120 is yes, a third packets-checking step 122 is performed, wherein a plurality of data packets are delivered by the network device to the gateway device which is located in the domain and corresponds to the aforementioned gateway address in the step 120, thereby confirming if the network device is connected to the gateway device. When the checking result of the step 122 is yes, the step 110 is performed for keeping the network configuration the same. When the checking result of the step 122 is no, the step 112 is performed for accessing the network device via the default IP address. Next, the step 114 is performed for setting the predetermined IP address and the gateway address into the network configuration of the network device.

In this embodiment, since the network configuration of the network device has included the IP address and the gateway address set by the user, when being restarted, the network device can access the information in the domain via the IP and gateway address previously set by the user after the network device is confirmed to be connected to the gateway device. In another embodiment, the step 114 is performed subsequently when the checking result of the step 122 is no.

Although the present invention has described in terms of preferred exemplary embodiments, it is not limited thereto. Any one skilled in the art should understand that he may make various changes, and modifications herein without departing from the spirit and scope of the present invention. Therefore, the scope of the present invention is defined by the appended claims. Accordingly, all changes, substitutions, and alternations are encompassed by the scope of the present invention defined by appended claims.

## Claims

1. A method for setting an Internet protocol (IP) address to a network device, the method comprising:
initializing the network device according to a network configuration;
checking if a dynamic host configuration protocol (DHCP) server exists in a domain in which the network device is located, thus obtaining a first checking result;
obtaining a dynamic IP address from the DHCP server and setting the dynamic IP address to the network device when the first checking result is yes; and
setting a predetermined IP address and a predetermined gateway address to the network device when the first checking result is no.

2. The method of claim 1, further comprising:
performing a first packets-checking step to confirm if the DHCP server is operated normally in the domain.

3. The method of claim 2, further comprising:
keeping the network configuration the same when the result of the first packets-checking step is yes.

4. The method of claim 2, further comprising:
performing the step of setting the predetermined IP address and the predetermined gateway address to the network device when the result of the first packets-checking step is no.

5. The method of claim 1, further comprising:
performing the step of setting the predetermined IP address and the predetermined gateway address to the network device by accessing the network device via a default IP address when the first checking result is no.

6. The method of claim 1, further comprising:
after the step of setting the predetermined IP address and the predetermined gateway address to the network device is performed, performing a second packets-checking step to confirm if a gateway device corresponding to the predetermined gateway address is connected to the network device.

7. The method of claim 6, further comprising:
when the result of the second packets-checking step is yes, performing a network configuration-updating step to write the predetermined IP address and the predetermined gateway address into the network configuration.

8. The method of claim 7, wherein the network configuration-updating step is performed by a write module, wherein the write module is an electronic circuit including a software program.

9. The method of claim 6, further comprising:
keeping the network configuration the same when the result of the second packets-checking step is no.

10. The method of claim 1, further comprising:
after the step of initializing the network device is performed, checking if an IP address and a gateway address have been set in the network configuration and obtaining a second checking result;
when the second checking result is no, performing the step of checking if the DHCP server exists in the domain in which the network device is located;
when the second checking result is yes, performing a third packets-checking step to confirm if a gateway device corresponding to the gateway address is connected to the network device;
when the result of the third packets-checking step is yes, keeping the network configuration the same; and
when the result of the third packets-checking step is no, performing the step of setting the predetermined IP address and the predetermined gateway address to the network device.
